(19) Europäisches Patentamt
European Patent Office
Office européen des brevets

(11) **EP 3 165 270 B1**

(12) **EUROPEAN PATENT SPECIFICATION**

(45) Date of publication and mention of the grant of the patent:
**18.07.2018 Bulletin 2018/29**

(21) Application number: **15306748.3**

(22) Date of filing: **03.11.2015**

(51) Int Cl.:
*B01D 53/04* (2006.01)     *B60C 23/00* (2006.01)
*B60C 23/16* (2006.01)     *B60G 17/00* (2006.01)
*A62C 2/24* (2006.01)      *A62C 2/06* (2006.01)
*B60N 2/52* (2006.01)      *B60G 11/27* (2006.01)
*B60G 11/30* (2006.01)     *B60G 17/052* (2006.01)
*B60N 2/02* (2006.01)      *B60T 13/26* (2006.01)
*B60T 17/00* (2006.01)     *B60T 17/06* (2006.01)
*F15B 15/10* (2006.01)     *F15B 15/16* (2006.01)
*F15B 15/20* (2006.01)     *F24F 11/00* (2018.01)

(54) **TEMPERATURE-GOVERNED PRESSURE ADJUSTMENT IN PNEUMATIC STRUCTURES**

TEMPERATURGESTEUERTE DRUCKEINSTELLUNG PNEUMATISCHER STRUKTUREN

RÉGLAGE DE PRESSION GOUVERNÉ PAR LA TEMPÉRATURE DANS DES STRUCTURES PNEUMATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.05.2017 Bulletin 2017/19**

(73) Proprietors:
• **Carbon Air Limited**
**Salford**
**M6 6FP (GB)**
• **Compagnie Générale des Etablissements Michelin**
**63000 Clermont-Ferrand (FR)**

(72) Inventors:
• **COAKELY, John**
**Salford M6 6FP (GB)**
• **VENEGAS, Rodofo Gustafo**
**Villeurbanne 69100 (FR)**
• **VERVAET, Patrick**
**63040 Clermont-Ferrand Cedex 9 (FR)**

(74) Representative: **Dequire, Philippe Jean-Marie Denis**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) References cited:
WO-A1-2015/145148     DE-A1-102004 011 121
DE-B- 1 063 860       US-A- 4 477 062
US-A- 4 626 018       US-A1- 2014 183 430

**Description**

**TECHNICAL FIELD**

The presently disclosed invention is generally directed to the use of pneumatic structures to perform one or more selected functions. More particularly, the presently disclosed invention is directed to the translation of pressure adjustment into deliberate performance of such functions when employing pneumatic structures in combination with adsorptive materials.

**BACKGROUND**

For pneumatic structures, multiple solutions are known that employ pressure governance to achieve a predicted functional output. For example, agricultural, mining and earthmoving industries employ vehicles having pneumatic tires for which pressure adjustment of at least one tire may be executed (e.g., by throttling air flow to an affected tire, by commanding inflation upon detection of slip, by commanding an integrated central tire inflation system, etc.). Mobility industries such as trucking utilize variable-volume chambers that use stored compressed air to selectively control a spring rate for damping devices. Various other pneumatic structures are known to effect extension and retraction of intususceptible structures such as roofs. Additional examples are disclosed by U.S. Patent No. 4,477,062 (directed to a control device for a fluid mechanism containing a variably pressurizable fluid, and disclosing the method steps corresponding to the preamble of claim 1); German Patent No. 1063860 (directed to selective generation of heat or cold upon adaptation to an alternating load); PCT Publication No. WO2015/145148 (directed to an apparatus for transferring a load having at least one unitary element of adsorptive material that increases an effective working volume of an enclosure for containing a pressurized gas); and German Patent Publication No. 102004011121 (directed to a substance or a mixture of substances introducible into tires and acting as an internal pressure regulator based upon processes that cause volume changes).

The translation of pressure adjustment into predictable functions is therefore demanded in a variety of applications. Such adjustment may be effected reliably and reproducibly by employing materials with well-established properties of temperature response.

**SUMMARY**

The presently disclosed invention provides methods of translating an adjusted medium pressure into performance of one or more selected functions. Exemplary embodiments of presently disclosed methods include providing a pneumatic structure in which the medium is retained at a starting pressure; providing an adsorptive material operable within a range of temperatures that is proportionate with a range of medium pressures in which the pneumatic structure operates; and adjusting the temperature of the adsorptive material to effect a commensurate adjustment of the medium pressure to a target pressure. In some embodiments, the adjusting includes at least one of conveying at least a portion of the medium between the pneumatic structure and the adsorptive material; heating the adsorptive material when the target pressure exceeds the starting pressure; and discontinuing the adjusting upon realizing the target pressure. The adjusted medium pressure is selected to perform one or more corresponding selected functions. The method according to the invention further includes at least one of detecting the starting pressure; comparing the starting pressure with the target pressure; and adjusting the temperature of the adsorptive material when a comparison indicates non-equivalence. For a system according to the invention, for performing such a method, at least one of a detection system and a monitoring system is provided, with the former detecting the starting pressure and generates one or more signals indicative thereof; and the latter receiving the signals generated by the detection system. A monitoring system as disclosed compares a detected starting pressure with the target pressure, and, when a comparison indicated non-equivalence, sends one or more commensurate control signals to perform the adjusting.

Other presently disclosed methods may include storing an auxiliary portion of the medium in a medium reservoir that is in fluid communication with the housing. Still other embodiments may include generating at least a portion of the medium required to attain the target pressure. Systems according to the invention include at least one regulator for adjusting a temperature of the adsorptive material and effecting a commensurate adjustment of the medium pressure. For such embodiments, the regulator may include least one heater for heating the adsorptive material when the target pressure exceeds the starting pressure. Some additional exemplary systems may include a gas-tight housing in which the adsorptive material is disposed and that is in fluid communication with the pneumatic structure. One or more of the presently disclosed systems may be associated with one or more vehicles having one or more pneumatic structures integral therewith.

Other aspects of the presently disclosed invention will become readily apparent from the following detailed description.

**BRIEF DESCRIPTION OF THE DRAWINGS**

The nature and various advantages of the presently disclosed invention will become more apparent upon consideration of the following detailed description, taken in conjunction with the accompanying drawings, in which like reference characters refer to like parts throughout, and in which:

FIG. 1 shows a graphical representation of air transfer as a function of temperature for an exemplary adsorptive material.
FIGS. 2 to 4 show exemplary temperature-governed pressure adjustment systems utilizing an adsorptive material.
FIGS. 5 and 6 show, respectively, a conventional air suspension system and an air suspension system according to an exemplary embodiment.
FIG. 7A schematically shows a conventional air management system and FIG. 7B shows a sectional view of a convention air spring used therewith.
FIG. 7C shows an exemplary air spring for use with the air management system of FIG. 7A.
FIGS. 8A and 8B show, respectively, a conventional vehicle air brake circuit and an air brake circuit according to an exemplary embodiment.
FIG. 9 shows a gas strut according to an exemplary embodiment.
FIGS. 10A and 10B show a telescopic mast of an exemplary embodiment in respective collapsed and unfolded states.
FIGS. 11A and 11B show a conventional robotic air muscle in respective deflated and inflated states.
FIG. 11C shows a robotic air muscle according to an exemplary embodiment.
FIGS. 12A, 12B and 12C show respective front, sectional expanded and sectional collapsed view of a ceiling valve according to an exemplary embodiment.
FIGS 13A, 13B and 13C show an adjustable car seat during an exemplary massage cycle.
FIG. 13D shows a system for an adjustable car seat according to an exemplary embodiment for use with the car seats of FIGS. 13A, 13B and 13C.

**DETAILED DESCRIPTION**

Reference now will be made in detail to embodiments of the invention, one or more examples of which are illustrated in the drawings. Each example is provided by way of explanation and not by limitation of the presently disclosed invention. It will be apparent to those skilled in the art that various modifications and variations can be made in the present invention without departing from the scope of the invention. For instance, features or steps illustrated or described as part of one embodiment can be used with one or more other embodiments to yield at least one further embodiment. Additionally, certain features may be interchanged with similar devices or features not expressly mentioned which perform the same or similar function. Thus, it is intended that the present invention covers such modifications and variations as come within the scope of the appended claims and their equivalents.

The presently disclosed invention is directed to methods, devices and systems for translating pressure adjustments into one or more commensurate functions. As disclosed herein, temperature adjustment of selected materials can effect commensurate pressure adjustment (or "pressure governance") for a pneumatic structure. The presently disclosed invention contemplates integration of an adsorptive material to ensure translation of such pressure adjustment into predictable and repeatable functions. As used herein, "adsorptive material" is interchangeable with "adsorbent", "adsorbent material", "porous solid" and any equivalent term that refers to groups of materials known to exhibit processes of adsorption and desorption by virtue of their high microporosity as described in the IUPAC convention. Such materials are capable of absorbing large amounts of air (or other gas) in a limited volume. The chosen adsorptive material may exhibit a selected geometry (e.g., spherical, monolithic, granular, etc.) or may be extruded or otherwise processed.

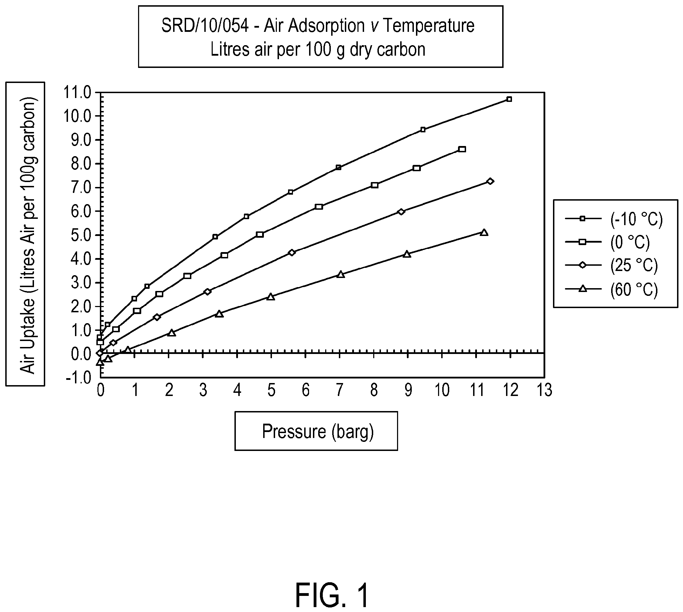

The adsorptive material may be selected from one or more exemplary materials including but not limited to activated carbon (also known as "active carbon", "carbon", "activated charcoal", "activated coal" and "carbo activates"). Activated carbon presents a commercially available and low-cost option that also benefits from a high degree of microporosity (e.g., one gram of activated carbon has a surface area surpassing $500m^2$). As shown by FIG. 1, activated carbon's ability to retain large air volumes is a function of its temperature. For the exemplary carbon depicted in the graph of FIG. 1, at 7 bars, 100g of carbon retains up to 8 litres of air at -10°C. The same amount of carbon at the same pressure, however, only retains up to about 3 litres of air at 60°C. Thus, large amounts of gas can be desorbed into a cavity by raising the temperature of activated carbon. The material temperature may therefore be manipulated at will to effect deliberate pressure adjustments for systems that employ pneumatic structures to perform selected or specialized functions.

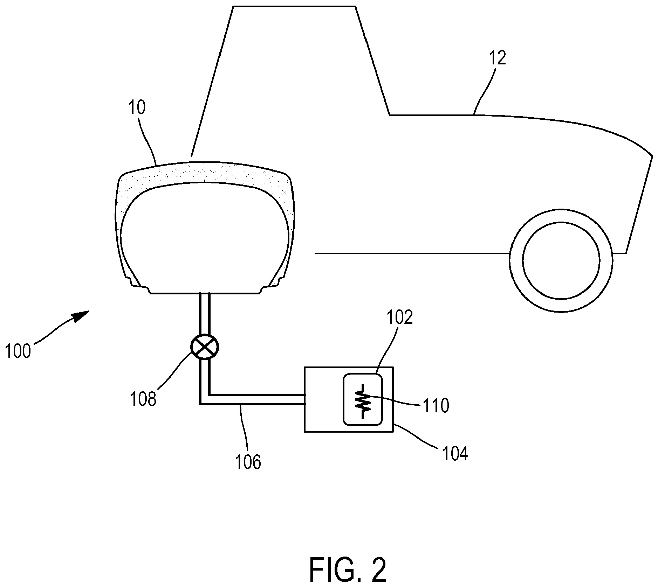

Now referring further to FIGS. 2 to 4, in which like numbers identify like elements, exemplary embodiments of the presently disclosed invention are shown and described with respect to a representative pneumatic structure. An exemplary pneumatic structure may be one or more pneumatic tires such as exemplary tire 10 shown and described with respect to a vehicle 12. For each embodiment, tire 10 may have an impermeable enclosure for retaining a medium (e.g., air) under pressure. Vehicle 12 may include more than one tire 10 or may include tire 10 in combination with one or more differently configured tires. It is understood that the configurations of tire 10 and vehicle 12 are exemplary and are not limited to any particular configurations.

It is further understood that, while exemplary embodiments are shown and described with respect to a tire, such embodiments (and any complements and equivalents thereof) are amenable to practice with differently configured pneumatic structures in which temperature-governed pressure adjustment can perform a delegated function or task. Such pneumatic structures may incorporate one or more impermeable enclosures that retain a medium under pressure (e.g., air, carbon dioxide, etc.). Examples of such systems include, but are not limited to, governance of an actuating force or stroke of a telescopic air spring or strut (or like device); volume control of an open air suspension system; providing sealed air suspension systems for numerous vehicles and rail systems; extension and retraction of architectural structures; inflation and deflation of adjustable seating; and other applications as would be understood by one of ordinary skill in the art. Other potential applications include, but are not limited to, central tire inflation systems (CTIS) for multiple vehicle types (e.g., cars, trucks, buses, off-road construction vehicles, agricultural vehicles, military vehicles, etc.); sealed air vehicle suspension systems (e.g., for cars, trucks, buses, off-road construction vehicles, agricultural vehicles, military vehicles, rail systems, etc.); using cooling to reduce a volume needed for a carbon-filled air cylinder in an open air suspension system and then using heating to drive off the maximum amount of air at the necessary flow rate; governing a height of a pneumatic extendable load system or a rail or tram pantograph (e.g., where the lowering of the actuator's spring rate through use of carbon may also be desirable in maintaining contact force once extension is complete); using variable heating and cooling of carbon to change an actuating force of an air spring or strut over a length of its stroke (e.g., to increase force as the piston extends from a cylinder, such as for an automotive tailgate strut); using variable heating and cooling of carbon to change the state of a pneumatically-actuated valve (i.e., creating a heat sensitive valve with no electronics or sensors and potentially with no metallic elements); varying an actuating force and/or height of a pneumatic jack; varying an actuating force and/or height of a sealed truck seat air spring; varying an operating height of a rolling lobe or convoluted air spring (e.g., on a truck, bus or car) by governing a temperature of carbon within and negating the need for central pressurized air storage or distribution systems; replacing all or part of an automotive air suspension system with self-governing sealed-for-life air springs (e.g., with top-up assistance given by dedicated high pressure, low flow rate, piezo pumps governed by levelling valves); reducing a working requirement of a compressor in any open pneumatic system by governing a temperature of a carbon store in a closed system (e.g., air brakes for trucks, buses and trains; opening and closing doors on buses or trains, etc.); governing the shape of pneumatic architectural structures (e.g., including retractable roofs on sports stadia); governing the shape of pneumatic structures in automotive applications (e.g., retractable open top roofs or sun roofs);governing height of a telescopic mast; governing force exerted by certain types of robotic air muscles; governing the action of fire-related ceiling valves; governing the firmness of air cushioning in seating (e.g., automotive); and inflating or deflating actuating bladders in adjustable seating (e.g., reducing cost, weight and noise with multi-way adjustable panels, including lateral support that is normally controlled by electrical motors).

In methods of practicing the presently disclosed invention, an adjusted medium pressure is translated into performance of one or more selected functions. In each of the disclosed embodiments, a pneumatic structure is provided in which the medium (e.g., air) is retained under pressure (e.g., a "starting pressure"), either prior to or during performance of a selected function. An adsorptive material is provided that is operable within a range of temperatures that is proportionate with a range of medium pressures in which the pneumatic structure operates. To ensure deliberate performance of the selected function, the material's temperature is adjusted so as to effect commensurate adjustment of the medium pressure (e.g., to a corresponding "target pressure"). The adjusted medium pressure represents a difference between the starting and target medium pressures and may itself be based upon the selected function. In some embodiments, heating may be terminated upon reaching a physical stop. For example, the material's temperature may be automatically governed by position of an element within the pneumatic structure relative to another fixed component. The adjustment of the material's temperature (and therefore the medium pressure) may be repeated as necessary to optimize performance of the pneumatic structure.

FIG. 2 shows an exemplary temperature-governed pressure adjustment system 100 employed with a pneumatic structure such as tire 10 that retains air under pressure. An adsorptive material 102 is provided that is operable within a range of temperatures that is proportionate with a range of air pressures in which tire 10 operates. Adsorptive material 102 may be an activated carbon that is selected from a plurality of commercially available activated carbons. It is understood, however, that the presently disclosed invention contemplates not only the use of activated carbon but also other adsorptive materials having commensurate properties. While adsorptive material 102 is depicted herein as a generally solid monolith, it is understood that absorbent material may exhibit any suitable geometry.

Adsorptive material 102 may be disposed in an enclosure or housing 104 that is in fluid communication with tire 10 (as used herein, "housing" refers to one or plural enclosures each having an adsorptive material disposed therein). While the embodiments herein are directed to employment of an adsorptive material in a housing external of the pneumatic structure, the presently disclosed invention contemplates comparable variations wherein the adsorptive material is at least partially disposed inside the pneumatic structure. For example, in some embodiments, the adsorptive material may be at least partially disposed inside the pneumatic structure without any housing or equivalent structure. In some other embodiments, the adsorptive material and the housing comprise a unit that is disposed at least partially in the pneumatic structure. In some additional embodiments, the adsorptive material and the housing comprise a unit that is disposed externally of the pneumatic structure.

In those embodiments of system 100 where the adsorptive material and the housing are disposed as a unit outside of the pneumatic structure, fluid communication between the pneumatic structure and the housing may be effected by at least one conduit such as conduit 106. Conduit 106 may include one or more bifurcated conduits that convey air between the housing and tire 10.

During operation of the corresponding pneumatic structure, adjustment of a temperature of adsorptive material 102 may be effected by one or more regulators. Thus, conveyance may be controlled by one or more optional valves 108 that enable manual or automatic adjustment of an air flow rate between housing 104 and tire 10. A pre-determined flow rate may be established between housing 104 and the pneumatic structure to manipulate the flow rate of air conveyed therebetween. Depending upon the unique properties of the pneumatic structure and the function to be performed, each valve 108 may selectively convey air until termination of the performance of the corresponding function. Air conveyance is adjustable between successive functions so as to ensure uninterrupted operation of the pneumatic structure.

Temperature adjustment may also be effected by one or more heaters that selectively heat adsorptive material 102 when the target pressure exceeds that starting medium pressure. Activation of heater 110 compels expulsion of air for deliberate conveyance by conduit 106 to tire 10 (or other pneumatic structure) while valve 108 remains open. Upon reaching the target pressure associated with the selected function, valve 108 is closed and the pneumatic structure continues operating without interruption. Heater 110 may be a resistive heating element having one or more heating elements or alternatively selected from any other amenable heating means. An electrical resistance of the material itself may be employed to cause its own heating. For embodiments that employ active carbon, inductive heating may be used to take advantage of the carbon's innate electrical conductivity. Alternatively, additional conductive elements (e.g., iron filings) may be introduced into the carbon to aid inductive or resistive heating. Heater 110 may be disposed in housing 104 and may be at least partially integrated within adsorptive material 102.

When the starting pressure exceeds the target medium pressure, valve 108 remains open, thereby permitting the conveyance of air from tire 10 to housing 104 until the medium reaches the target pressure. The adjusted medium pressure that is realized during the conveyance deliberately controls the performance of the corresponding function (e.g., speed, duration, timing during operation of the pneumatic structure, etc.) without activation of heater 110.

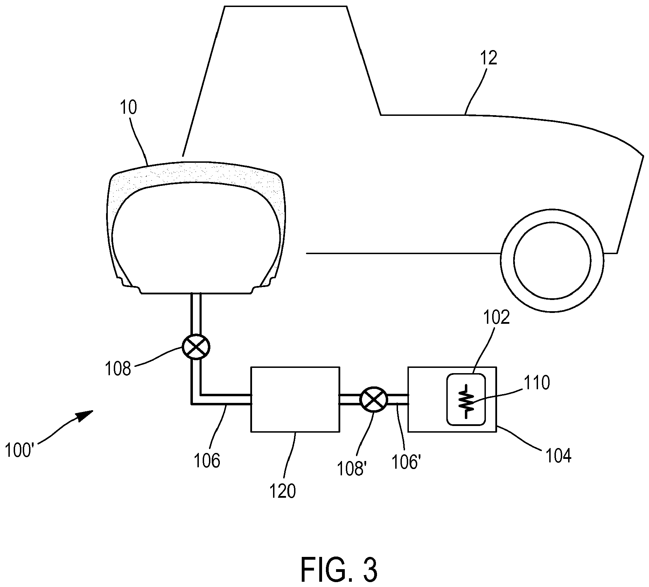

Now referring to FIG. 3, a temperature-governed pressure adjustment system 100' is provided that is similar to system 100 described hereinabove. In addition to the elements described with respect to system 100, system 100' is a closed-loop system that includes a medium reservoir such as air reservoir 120 disposed in fluid communication with each of the pneumatic structure (i.e., tire 10) and the adsorptive material (i.e., material 102). In those embodiments of system 100' where the adsorptive material and the housing are disposed as a unit outside of the pneumatic structure, fluid communication among the pneumatic structure, the housing and the medium reservoir may be established by one or more conduits such as conduits 106, 106'. One or more commensurate valves 108, 108' enable customizable regulation of the applicable air flow rates for performing selected functions. Although a pair of conduits is shown with respective conveyance controls, it is understood that conveyance may be effected by any number of conduits and regulated by any equivalent means as is known in the art. It is understood that, in those embodiments of system 100' where the adsorptive material and the housing are disposed as a unit inside the pneumatic structure, fluid communication may be established with air reservoir 120 by a single conduit or conveyance 106.

In system 100', air reservoir 120 selectively receives from, and delivers to, tire 10 an auxiliary air volume. The auxiliary air volume may be commensurate with an air volume necessary to reach the adjusted air pressure and thereby perform the selected function. By opening valve 108, air reservoir 120 can either deliver stored air to tire 10 in conditions that require an increase in air pressure, or alternatively receive air from tire 10 in conditions that require a decrease in air pressure. If tire 10 must operate in conditions that require successive changes in air pressure, heater 110 may be optionally activated. In this configuration, adsorptive material 102 increases air storage capacity and thereby complements the pressure adjustment capability of system 100'.

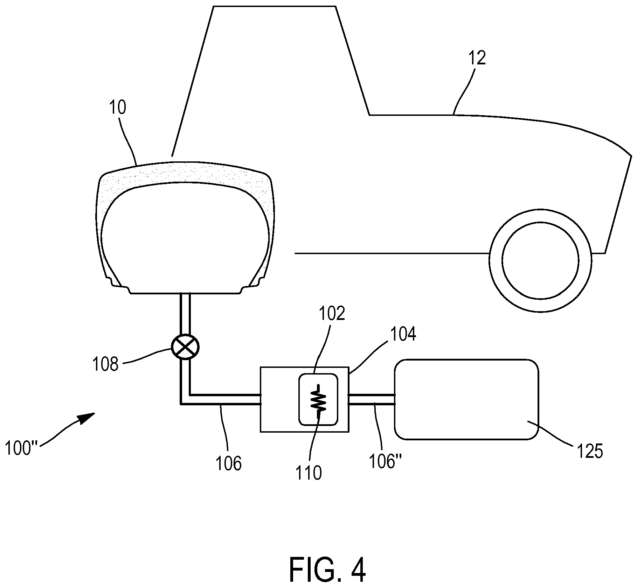

Now referring to FIG. 4, a temperature-governed pressure adjustment system 100" is provided that is similar to systems 100 and 100' described hereinabove. System 100" is an open-loop system that includes a compressor 125 for generating an auxiliary air volume for delivery to adsorptive material 102 and eventually to tire 10. In those embodiments of system 100" where the adsorptive material and the housing are disposed as a unit outside of the pneumatic structure, fluid communication among the pneumatic structure, the housing and the compressor may be established by one or more conduits such as conduits 106, 106" (although it is understood that conveyance may be effected by any number of conduits and regulated by any equivalent means).

Compressor 125 generates at least a portion of an air volume that enables performance of a selected corresponding function using the pneumatic structure. Compressor 125 may selectively generate and deliver a required air volume in concert with one or more commands to perform the selected function. Upon generation of this required air volume, adsorptive material 102 retains the compressed air and does so without the need to compensate for any associated energy expenditure. The air pressure, and any adjustment thereof, is therefore controlled and managed for deliberate delivery to, and evacuation from, the pneumatic structure (e.g., for controlled inflation or deflation of tire 10). System 100"may be readily implemented with existing compressor systems while reducing the storage volume and compressor power requirements of such systems.

For pneumatic structures, variations in load are realized for which compensatory pressure adjustments are effected by the presently disclosed invention. The presently disclosed invention not only accommodates pressures that vary among different pneumatic structures; it also accommodates pressures that vary when a pneumatic structure operates in different conditions. For example, when the pneumatic structure is a tire, a single vehicle may have different tire sizes present on the front and rear axles while another vehicle may have tires of the same size subject to varying loads and pressures (e.g., as with a tractor having a plow). In another example, when the pneumatic structure is a sealed air suspension having a variable air volume, the structure may exhibit a common configuration that accommodates effective braking performance for a variety of vehicles and transport systems (including but not limited to passenger vehicles, heavy trucks, agricultural vehicles, military transports, rail systems and the like).

In the following example, a pneumatic structure of specified configuration is configured with respect to each of the embodiments described herein.

## EXAMPLE

Each of systems 100, 100' and 100" is utilized with a pneumatic structure such as an agricultural tire having the following specifications:

Tire size: 600/70
Load: 3500 kg
Internal tire volume: 600 litres
Target pressure on soil: 0,9b
Target pressure on road surfaces at 65 kph: 1,6 b.

Using activated carbon as an adsorptive material, the required adsorption to attain the target road surface pressure when starting from the target soil pressure can be expressed as:

$$600*(1,6-0,9)/22,4 = 19 \text{ moles}$$

### TABLE 2

| | System 100 | System 100' | System 100" |
|---|---|---|---|
| Ambient Temperature | 20°C | 20°C | 20°C |
| Heating Temperature | 150°C | 150°C | 150°C |
| Pressure in the housing upon valve opening | 0,9 bar | 0,9 bar | 12 bar |
| Air discharge rate during heating (per 100g of activated carbon) | 11/100g | 11/100g | 7.5 1/100g |
| Quantity of activated carbon | 42 kg | 42 kg | 5,6 kg |
| Carbon compaction density | 530 g/l | 530 g/l | 530 g/l |
| Housing volume | 801 | 801 | 40 1 (without |
| | | | carbon) 10,6 l (with carbon) |
| Effective decrease of reservoir volume | N/A | N/A | -73% |

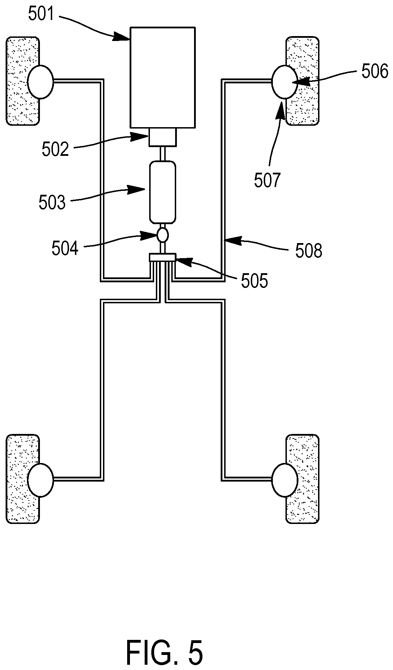

In a further embodiment, the control of temperature of an adsorptive material can be used to govern pressure throughout a sealed or partially sealed air suspension system. Conventional air suspension systems for cars, trucks, buses, off-road construction and agricultural vehicles, military vehicles and rail systems, all use systems of compressors, accumulators and air lines to feed air springs with compressed air. In a conventional system as shown in FIG. 5, a vehicle's engine 501 powers a compressor 502 to ingest air from the atmosphere to maintain pressure in a main air tank 503 (e.g., at around 12 bar). A control box 504 governs a bank of solenoid valves 505 that feed compressed air to the four air springs 507 via a network of fluid conduits or air lines 508. The height of each air spring is governed by the pressure within them. A levelling valve 506 on each spring ensures that a desired ride height is not exceeded by venting air to the outside atmosphere once a stop has been reached, so reducing pressure inside the spring.

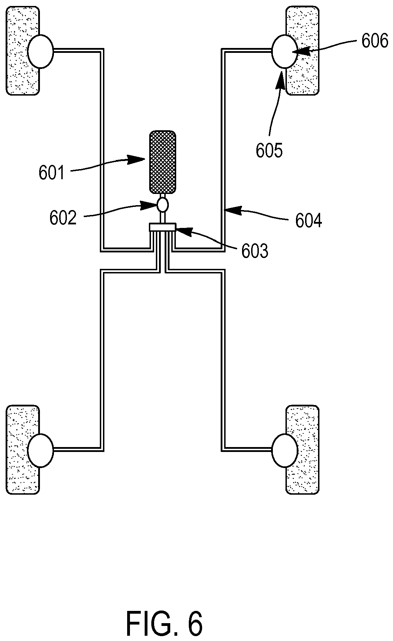

In an embodiment of the current invention in FIG. 6, a central air tank 601 is now filled with activated carbon or a similar adsorptive material at or around the same pressure as the air springs when the vehicle is empty and on its lowest ride height setting (e.g., from about 6 bar to about 8 bar). Heating and possibly cooling elements within the air tank govern the temperature of the carbon. Height sensors 606 on the air springs 605 detect when additional height is needed, either because of additional loading on the vehicle, or a different level of ground clearance is required. They activate the heating elements in the carbon-filled air tank 601, for example, via a coordinating control box 602, causing pressure throughout the system to rise because of desorption. Once the sensors detect that the correct height has been achieved (acting as a thermal levelling valve), the airlines to the individual springs are isolated by the solenoid valve bank 603.

The carbon air tank cools down (or may be actively chilled down) to its resting temperature, with pressure now below that of the air springs. If higher pressure is required within the air springs to cope with further increases in loading or ride height, the carbon air store will be heated to a higher temperature than before, before the solenoid valve banks open to allow air to be fed to the springs. If lower pressure is subsequently needed, perhaps due to unloading of the vehicle or the selection of a lower ride height (e.g., for aerodynamic benefit in motorway use), the solenoid valves can open and allow air from the springs to return to the air store.

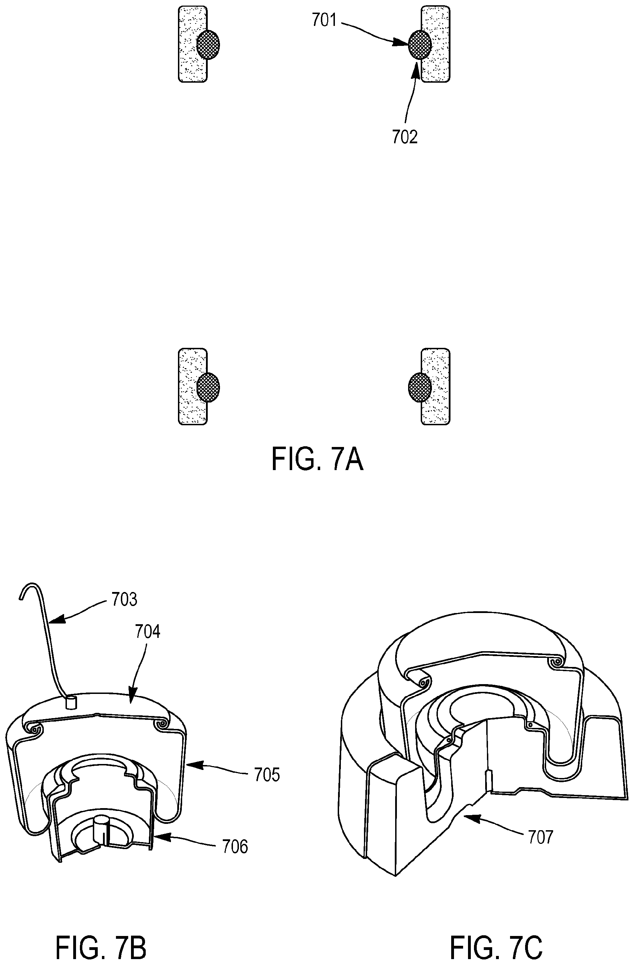

In additional exemplary variants of this embodiment, shown in FIGS. 7A, 7B and 7C, all central air management systems have been replaced by activated carbon stored within or directly adjacent to each individual air spring 701. In a standard air spring as shown by FIG. 7B, the load is born by a column of compressed air, supplied by pressure lines 703 fed through the air springs' bead plate 704. The air is contained by a cylindrical rubber lobe 705 which is allowed to roll over a fixed cylinder or piston 706 so allowing the volume of the compressed air column to change in response to the action of the wheel.

In the presently disclosed embodiment of FIG. 7C, the piston may be filled with temperature-controlled activated carbon. The piston may be optionally extended to allow a larger carbon-filled chamber 707 to be maintained in direct communication with the piston, thereby allowing the necessary change in pressure to occur through heating.

The temperature of the carbon housed inside each air spring can be constantly governed to achieve the requisite pressure, as determined by a thermal levelling valve 702 5see FIG. 7A). Alternatively, if an auxiliary carbon-filled chamber is used, a solenoid valve may act to isolate the spring air volume from the auxiliary chamber volume once the thermal levelling valve discerns that the correct height has been reached. The carbon inside the auxiliary reservoir may then be allowed to cool and depressurize to its resting state. This allows the air spring to vent air back into the reservoir if unloading of the vehicle requires it. The thermal levelling valves at all four corners may communicate with each other wirelessly or through physical connections to ensure that the vehicle maintains a correct ride height and attitude with respect to the ground.

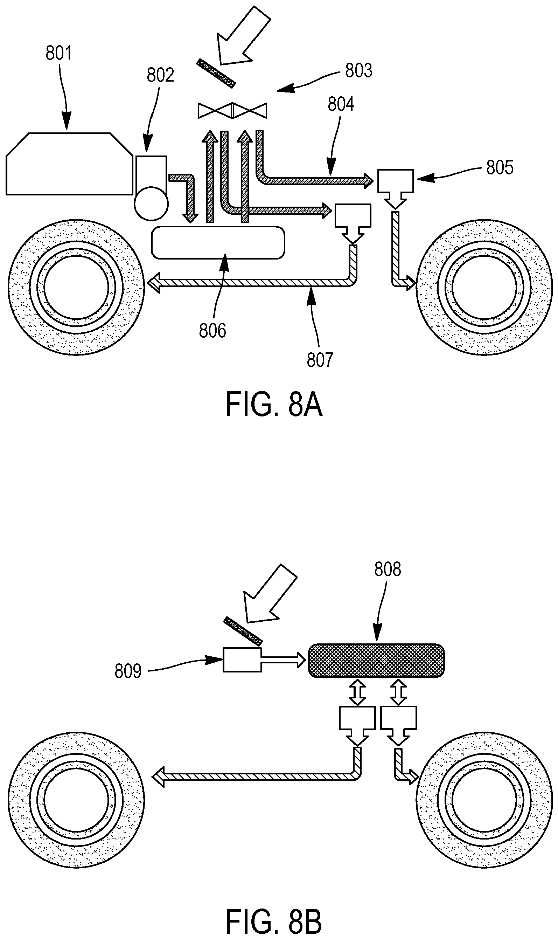

In FIGS. 8A and 8B, a conventional vehicle air brake circuit is described, along with an embodiment of the presently disclosed invention. In the conventional case shown in FIG. 8A, the vehicle's engine 801 drives an air compressor 802 to send high pressure air to an air receiver or central air tank 806. Central air tank 806 sends a feed of compressed air to the brake servo valves 803 controlled by the brake pedal, which in turn relays compressed air via air lines 804 to pressure intensifier units 805. Units 805 perform pneumatic-to-hydraulic conversion. High pressure hydraulic lines 807 then actuate the vehicle's disk brakes and other ancillary circuits.

In the exemplary embodiment shown in FIG. 8B, the brake pedal actuates an electronic control box 809 which regulates temperature in a carbon-filled air receiver. The heating or chilling of said unit will govern pressure being fed to the pressure intensifiers, and so in turn govern the hydraulic pressure being fed to the brakes and other ancillary circuits. Since the system is now a closed circuit, certain gases such as carbon dioxide may be used as the sorbent in preference to air, because some carbons have a particular adsorption affinity with such gases, leading to increase in temperature authority. Alternatively, a conventional air tank 806 (see FIG. 8A) may be substituted with a temperature-controlled carbon cylinder to augment the actuating pressure force required on braking, so allowing other components in the circuit to be down-graded, particularly the size, weight and power of the mechanical compressor.

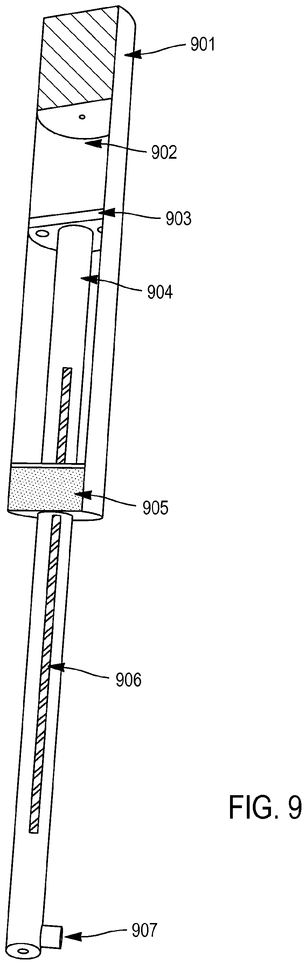

In FIG. 9, an exemplary gas strut is shown that employs the teachings of the present disclosure. A sorbent-filled chamber 901 is maintained in fluid communication with the strut's main pressurized gas cavity 902. This pressurized gas acts on a piston 903 to provide force on a rod 904. Rod 904 exits the cavity through an oil-filled chamber 905 that maintains the integrity of the pressurized cavity. Typically, the pressure exerted by the conventional gas strut would decay in line with the excursion of the rod from the chamber.

By raising the temperature of the sorbent chamber 901, extra gas is driven off so as to raise pressure within the cavity. Hence, the actuating force of the strut may be substantially maintained over the course of its excursion, be raised over the course of its excursion or be altered dynamically over the course of its excursion. A variable-force actuator is thereby obtained without the need for complex lever geometries, compressed air lines or an on-board compressor. To maintain a desired force curve over the length of the piston's stroke, variation in temperature may be governed automatically by an optional embedded sensor or strip 906 that communicates the rod's state of excursion from the chamber to the sorbent's temperature governor. Alternatively rod 904 (or a portion thereof, such as a rod stop) might include a pressure transducer that communicates whether the rod has reached the end of its travel. In this case, no further pressure is required for elevation. Such a transducer may also be used to govern a required pressure at the point of contact with a body upon which it acts, independently of excursion distance.

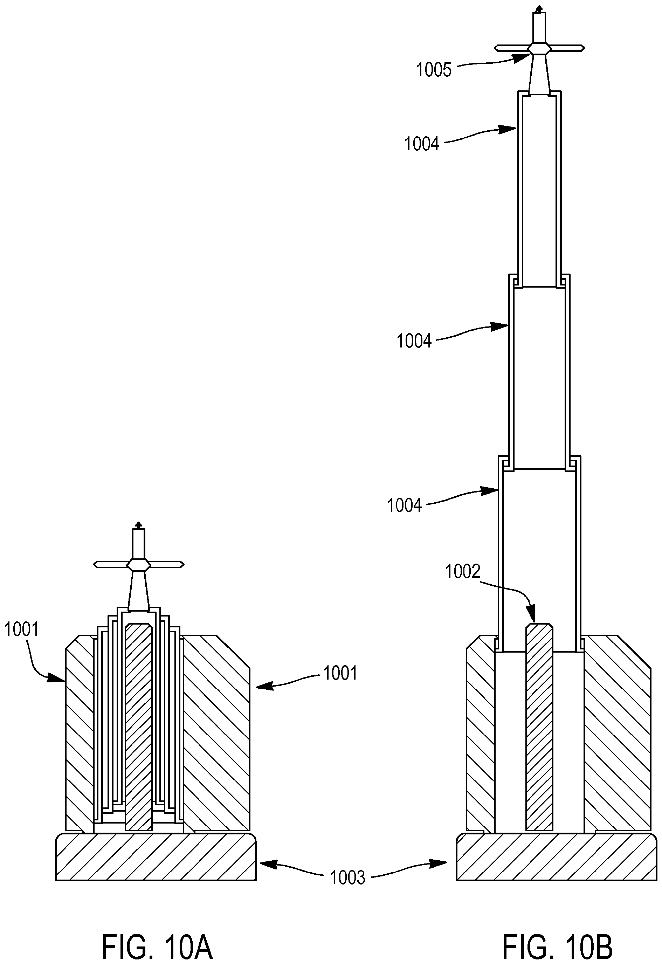

In FIGS. 10A and 10B, a telescopic mast for a communication antenna 1005 is shown. The exemplary mast includes chambers disposed around an outer telescopic element of the mast 1001 (see FIG. 10A), within a core of an array of telescopic elements 1002 (see FIG. 10B), or within a structural base 1003 (see FIG. 10B). It is understood that such chamber may be arranged simultaneously in any combination of these three configurations. The chamber contains temperature-governed activated carbon or other sorbents.

In a collapsed state, the system cavities shall be kept at a positive pressure to the outside atmosphere just below the level that would cause the telescopic elements 1004 to expand (see FIG. 10B). This ensures that a bare minimum of extra gas will need to be liberated by the heating of the sorbent chambers to fill the growing pressurized volume as the telescopic elements unfold, until a maximum height is reached and locked out mechanically. At this point, the sorbent masses are allowed to cool, and pressure within the system drops so that the system can be controllably collapsed after the manual lock-out is released.

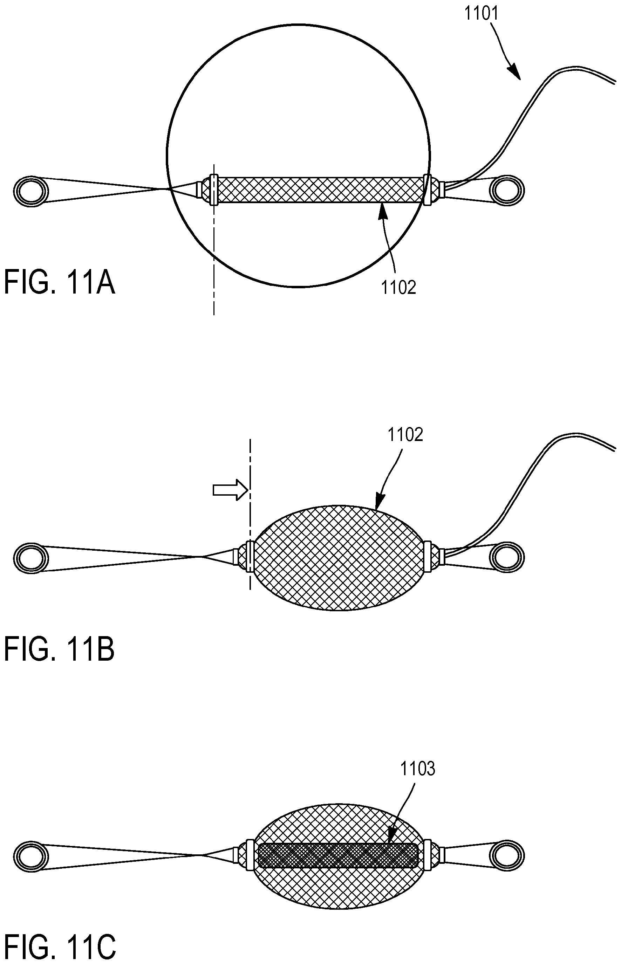

In FIGS. 11A, 11B and 11C, a robotic air muscle is shown. In a conventional air muscle as shown in FIGS. 11A and 11B, an external pressurized air line 1101 feeds air to a flexible bladder 1102 whose surface area is kept constant by reinforcement fibers. As pressure rises, the surface area does not bulge or stretch elastically but instead changes shape to become more spherical, to achieve the highest possible volume for a given surface area. This results in a contraction force along the axis of the bladder to mimic the action of a real muscle. The practicality of the system is limited by the complexity and weight involved in supplying dedicated pressure lines for each air muscle, and by the need for the heavy and noisy compressor and pressure governing components to manage them.

In the exemplary embodiment shown in FIG. 11C, larger and more slow-acting air muscles could make use of a temperature governed sorbent block 1103 to achieve the required change of form in a closed systems, without need of pressure line supply.

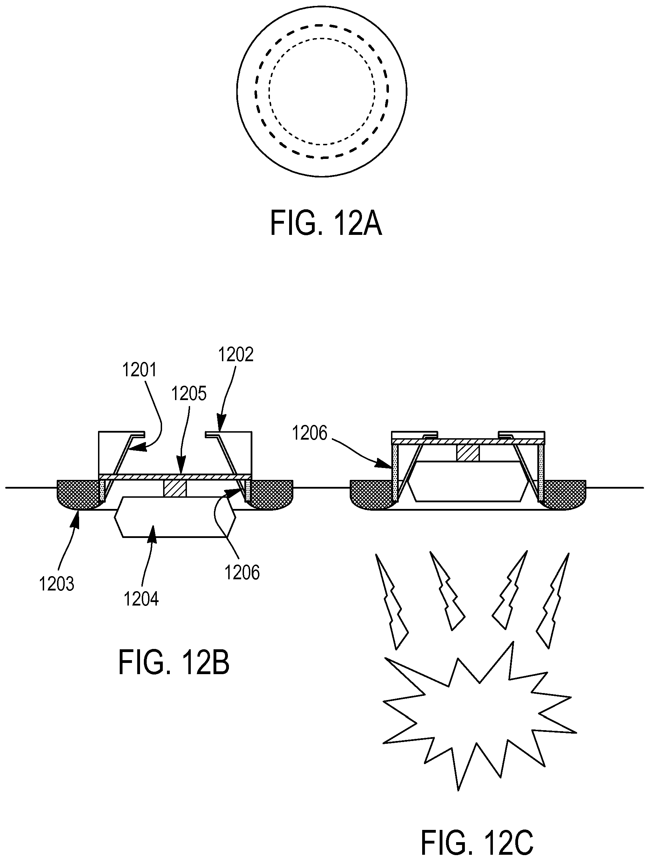

In FIGS. 12A, 12B and 12C, a fire rated ceiling valve is shown. Ceiling valves are commonly used to allow air flow in suspended ceilings that can be choked off in the event of fire, so limiting the spread of flames, smoke and toxic fumes. Typically, a central blocking element 1204 would feature an intumescent material on its rear face which would expand in volume on contact with extreme heat, so blocking flow through the channel housing 1201 (see FIG. 12B). In this embodiment, the leading edge of the ceiling-mounted housing element 1203 is filled with a sorbent material such as activated carbon which is in fluid communication with an expandable sliding cleat volume 1206 from which is suspended the central plug structure 1205 and 1204. Upon heating, the pressure inside the ring of sorbent material will rise significantly, expanding the volume of the sliding cleat and driving the plug upwards into the housing (see FIG. 12C). Unlike and intumescent plug, the expansion can be tuned to occur at lower temperatures than those needed to set off an intumescent material and could be reversible. The heat-activated translation of the element into the housing could also be used to open sprinkler valves and trigger fire alarms automatically.

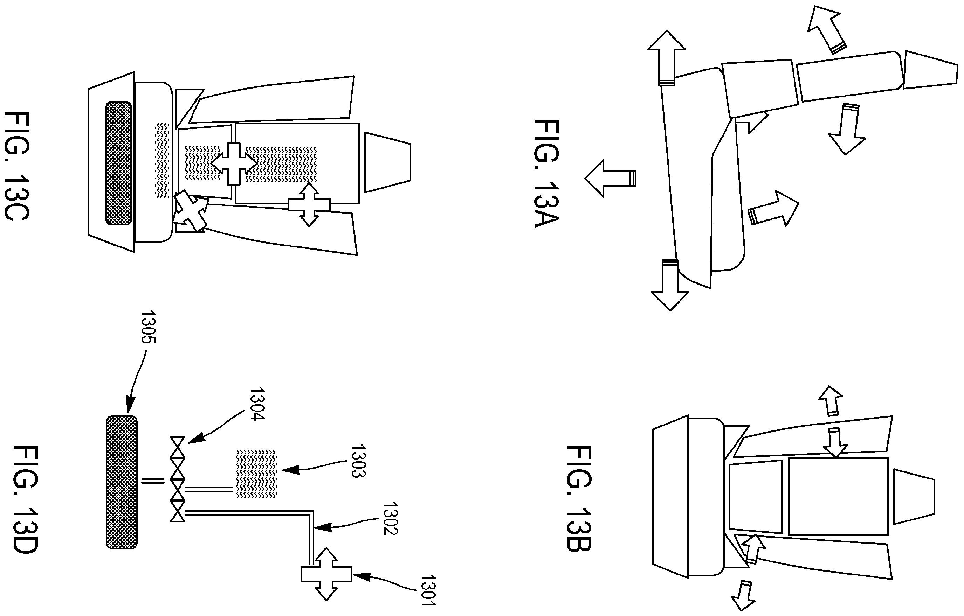

In FIGS. 13A, 13B, 13C and 13D, an adjustable car seat features exemplary embodiments of the presently disclosed invention. A modern car seat can feature up to 12 moving elements, as well as heating, cooling and massage actions. The result is component weighing up to 50 Kg and featuring up to a dozen separate electrical servo motors.

According to the present disclosure, a small temperature-governed sorbent air cylinder 1305 is housed within the seat (see FIG. 13D). It feeds pressurized air to a bank of small servo operated valves 1304. The valves, in turn, feed pressurized air through a network of lightweight air lines 1302 to two different types of air actuators: a rotary actuator 1301 which can turn a component through a given range of motion, and a lightly pressurized air bladder 1303. Air bladder 1303 can use changes in air pressure in two ways: to statically rigidize or soften general seat stiffness, or to slowly cycle alternations in stiffness and softness to achieve a massage action (for example, through a cycle as shown in FIGS. 13A, 13B and 13C). The system would be significantly lighter than a servo-actuated seat, and would be likely to be gentler and more yielding in action, since air actuators also behave as springs.

In some embodiments of the presently disclosed invention, a detection system may detect the starting pressure in the pneumatic structure (e.g., air pressure in tire 10) and generate one or more signals indicative thereof. In some embodiments, a monitoring system may receive the signals generated by the detection system, and compare the detected starting pressure with the target pressure. In this manner, non-equivalence is indicative of the adjusted medium pressure necessary to perform a commensurate function. When a comparison indicates non-equivalence, the monitoring system may send one or more commensurate control signals to adjust the temperature of the adsorptive material. This adjustment may include conveying at least a portion of the medium between the pneumatic structure and the adsorptive material. When the target pressure exceeds the starting pressure, this adjustment may include activation of the heater to effect a commensurate increase in the material temperature until the target pressure is attained.

At least some of the various techniques described herein may be implemented in connection with hardware or software or, where appropriate, with a combination of both. For example, electrical data processing functionality may be used to implement any aspect of power computation and adjustment, including implementation in connection with a computing device (including a mobile networking apparatus) that includes hardware, software, or, where appropriate, a combination of both. The processing functionality may correspond to any type of computing device that includes one or more processing devices. The computing device can include any type of computer, computer system or other programmable electronic device, including a client computer, a server computer, a portable computer (including a laptop and a tablet), a handheld computer, a mobile phone (including a smart phone), a gaming device, an embedded controller, a near-field communication device, a device with applications implemented at least partly using a cloud service, and any combination and/or equivalent thereof (including touchless devices). Moreover, the computing device may be implemented using one or more networked computers, e.g., in a cluster or other distributed computing system. The network may be a LAN, a WAN, a SAN, a wireless network, a cellular network, radio links, optical links and/or the Internet, although the network is not limited to these network selections. A server may be further configured to facilitate communication between at least one module as presently disclosed and one or more of the computing devices.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm").

As used herein, the term "method" or "process" refers to one or more steps that may be performed in other ordering than shown without departing from the scope of the presently disclosed invention. As used herein, the term "method" or "process" may include one or more steps performed at least by one electronic or computer-based apparatus. Any sequence of steps is exemplary and is not intended to limit methods described herein to any particular sequence, nor is it intended to preclude adding steps, omitting steps, repeating steps, or performing steps simultaneously.

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

While particular embodiments of the disclosed apparatus have been illustrated and described, it will be understood that various changes, additions and modifications can be made without departing from the scope of the present disclosure. Accordingly, no limitation should be imposed on the scope of the presently disclosed invention, except as set forth in the accompanying claims.

## Claims

1. A method of translating an adjusted medium pressure into performance of one or more selected functions, the method comprising:

   providing a pneumatic structure (10) in which the medium is retained at a starting pressure;
   providing an adsorptive material (102) operable within a range of temperatures that is proportionate with a range of medium pressures in which the pneumatic structure operates;
   adjusting the temperature of the adsorptive material to effect a commensurate adjustment of the medium pressure to a target pressure; and
   selecting the adjusted medium pressure necessary to perform the one or more selected functions;
   **characterized in that** the method further comprises at least one of:

   detecting the starting pressure;
   comparing the starting pressure with the target pressure; and
   adjusting the temperature of the adsorptive material (102) when a comparison indicates non-equivalence.

2. The method of claim 1, wherein the adjusting includes at least one of:

   conveying at least a portion of the medium between the pneumatic structure and the adsorptive material (102);

heating the adsorptive material (102) when the target pressure exceeds the starting pressure; and discontinuing the adjusting upon realizing the target pressure.

3. The method of claim 2, wherein one or more conduits (106, 106', 106") perform the conveying.

4. The method of any preceding claim, further comprising providing a gas-tight housing (104) in which the adsorptive material is disposed and that is in fluid communication with the pneumatic structure.

5. The method of claim 4, further comprising storing an auxiliary portion of the medium in a medium reservoir (120) that is in fluid communication with the housing.

6. The method of any of claims 1 to 4, further comprising generating at least a portion of the medium required to attain the target pressure.

7. The method of any preceding claim, wherein the adsorptive material (102) comprises activated carbon.

8. The method of any preceding claim, wherein the adjusting is performed repeatedly.

9. A system (100, 100', 100") for performing any of the methods of claims 1 to 8, comprising:

an adsorptive material (102) that is in fluid communication with the pneumatic structure (10) and operable within a range of temperatures that is proportionate with a range of medium pressures in which the pneumatic structure is operable; and
at least one regulator (108, 108') for adjusting a temperature of the adsorptive material and effecting a commensurate adjustment of the medium pressure, **characterized in that** the system further comprises at least one of:

a detection system that detects the starting pressure and generates one or more signals indicative thereof; and
a monitoring system that receives the signals generated by the detection system, compares a detected starting pressure with the target pressure, and, when a comparison indicated non-equivalence, sends one or more commensurate control signals to perform the adjusting.

10. The system of claim 9, further comprising a gas-tight housing (104) in which the adsorptive material (102) is disposed and that is in fluid communication with the pneumatic structure.

11. The system of claim 9 or claim 10, wherein the at least one regulator comprises at least one heater (110) for heating the adsorptive material (102) when the target pressure exceeds the starting pressure.

12. The system of claim 10 or claim 11, further comprising a vehicle having one or more pneumatic structures (10) integral therewith.

**Patentansprüche**

1. Verfahren zum Übertragen eines eingestellten Drucks eines Mediums zur Erfüllung von einer oder mehreren ausgewählten Funktionen, wobei das Verfahren aufweist:

Bereitstellen einer Luftreifen-Struktur (10), in welcher das Medium unter einem Ausgangsdruck gehalten wird;
Bereitstellen eines adsorbierenden Materials (102), welches innerhalb eines Bereichs von Temperaturen betriebsfähig ist, welcher proportional zu einem Bereich von Drücken des Mediums ist, in welchem die Luftreifen-Struktur arbeitet;
Einstellen der Temperatur des adsorbierenden Materials, um eine entsprechende Einstellung des Drucks des Mediums auf einen Solldruck zu bewirken; und
Auswählen des notwendigen eingestellten Drucks des Mediums, um die eine oder mehreren ausgewählten Funktionen zu erfüllen;
**dadurch gekennzeichnet, dass** das Verfahren ferner mindestens eines aufweist von:

Erfassen des Ausgangsdrucks;

Vergleichen des Ausgangsdrucks mit dem Solldruck; und

Einstellen der Temperatur des adsorbierenden Materials (102), wenn ein Vergleich mangelnde Gleichwertigkeit angibt.

2. Verfahren nach Anspruch 1, wobei das Einstellen mindestens eines umfasst von:

Befördern zumindest eines Teils des Mediums zwischen der Luftreifen-Struktur und dem adsorbierenden Material (102);

Erwärmen des adsorbierenden Materials (102), wenn der Solldruck den Ausgangsdruck übersteigt; und

Abbrechen des Einstellens, wenn der Solldruck erzielt ist.

3. Verfahren nach Anspruch 2, wobei eine oder mehrere Leitungen (106, 106', 106") das Befördern bewerkstelligen.

4. Verfahren nach einem der vorhergehenden Ansprüche, ferner aufweisend Bereitstellen eines gasdichten Gehäuses (104), in welchem das adsorbierende Material angeordnet ist, und welches in fluider Verbindung mit der Luftreifen-Struktur steht.

5. Verfahren nach Anspruch 4, ferner aufweisend Speichern eines Zusatzteils des Mediums in einem Mediumbehälter (120), welcher in fluider Verbindung mit dem Gehäuse steht.

6. Verfahren nach einem der Ansprüche 1 bis 4, ferner aufweisend Erzeugen von mindestens einem Teil des erforderlichen Mediums, um den Solldruck zu erreichen.

7. Verfahren nach einem der vorhergehenden Ansprüche, wobei das adsorbierende Material (102) Aktivkohle aufweist.

8. Verfahren nach einem der vorhergehenden Ansprüche, wobei das Einstellen wiederholt durchgeführt wird.

9. System (100, 100', 100") zum Durchführen eines der Verfahren nach Ansprüchen 1 bis 8, aufweisend:

ein adsorbierendes Material (102), welches mit der Luftreifen-Struktur (10) in fluider Verbindung steht und innerhalb eines Bereichs von Temperaturen betriebsfähig ist, welcher proportional zu einem Bereich von Drücken des Mediums ist, in welchem die Luftreifen-Struktur betriebsfähig ist; und

mindestens einen Regler (108, 108') zum Einstellen einer Temperatur des adsorbierenden Materials und Bewirken einer entsprechenden Einstellung des Drucks des Mediums,

**dadurch gekennzeichnet, dass** das System ferner mindestens eines aufweist von:

ein Erfassungssystem, welches den Ausgangsdruck erfasst und ein oder mehrere, diesen anzeigende Signale erzeugt; und

ein Überwachungssystem, welches die von dem Erfassungssystem erzeugten Signale empfängt, einen erfassten Ausgangsdruck mit dem Solldruck vergleicht und, wenn ein Vergleich mangelnde Gleichwertigkeit angibt, ein oder mehrere entsprechende Steuersignale sendet, um das Einstellen durchzuführen.

10. System nach Anspruch 9, ferner aufweisend ein gasdichtes Gehäuse (104), in welchem das adsorbierende Material (102) angeordnet ist, und welches in fluider Verbindung mit der Luftreifen-Struktur steht.

11. System nach Anspruch 9 oder Anspruch 10, wobei der mindestens eine Regler mindestens eine Heizung (110) zum Erwärmen des adsorbierenden Materials (102) aufweist, wenn der Solldruck den Ausgangsdruck übersteigt.

12. System nach Anspruch 10 oder Anspruch 11, ferner aufweisend ein Fahrzeug mit einer oder mehreren damit integralen Luftreifen-Strukturen (10).

**Revendications**

1. Procédé pour traduire la pression réglée d'un milieu en exécution d'une ou plusieurs fonctions choisies, le procédé comprenant les opérations consistant à :

utiliser une structure pneumatique (10) dans laquelle le milieu est retenu à une pression de démarrage ;

faire appel à une matière adsorbante (102) utilisable à l'intérieur d'une plage de températures qui est proportionnée à la plage de pressions du milieu dans laquelle la structure pneumatique fonctionne ; et

régler la température de la matière adsorbante pour effectuer un réglage commensurable de la pression du milieu à une pression cible ; et

choisir la pression réglée du milieu nécessaire pour exécuter la ou les fonctions choisies,

**caractérisé en ce que** le procédé comprend en outre au moins une des opérations consistant à :

détecter la pression de départ ;

comparer la pression de départ avec la pression cible ; et

régler la température de la matière adsorbante (102) quand une comparaison indique une non-équivalence.

2. Procédé selon la revendication 1, dans lequel le réglage comprend au moins une des opérations consistant à :

transporter au moins une partie du milieu entre la structure pneumatique et la matière adsorbante (102) ;

chauffer la matière adsorbante (102) quand la pression cible dépasse la pression de démarrage ; et

interrompre le réglage lorsque la pression cible est atteinte.

3. Procédé selon la revendication 2, dans lequel un ou plusieurs conduits (106, 106', 106") exécutent le transport.

4. Procédé selon l'une quelconque des revendications précédentes, comprenant en outre l'opération consistant à utiliser un boîtier (104) étanche aux gaz dans lequel est disposée la matière adsorbante et qui est en communication fluidique avec la structure pneumatique.

5. Procédé selon la revendication 4, comprenant en outre l'opération consistant à stocker une partie d'appoint du milieu dans un réservoir (120) de milieu qui est en communication fluidique avec le boîtier.

6. Procédé selon l'une quelconque des revendications 1 à 4, comprenant en outre l'opération consistant à produire au moins une partie du milieu nécessaire pour atteindre la pression cible.

7. Procédé selon l'une quelconque des revendications précédentes, dans lequel la matière adsorbante (102) comprend du charbon actif.

8. Procédé selon l'une quelconque des revendications précédentes, dans lequel le réglage est exécuté à plusieurs reprises.

9. Système (100, 100', 100") pour exécuter l'un quelconque des procédés selon les revendications 1 à 8, comprenant :

une matière adsorbante (102) qui est en communication fluidique avec la structure pneumatique (10) et est utilisable à l'intérieur d'une plage de températures qui est proportionnée à la plage de pressions du milieu dans laquelle la structure pneumatique peut fonctionner ; et

au moins un régulateur (108, 108') pour régler la température de la matière adsorbante et effectuer un réglage commensurable de la pression du milieu, **caractérisé en ce que** le système comprend en outre au moins un dispositif parmi :

un système de détection qui détecte la pression de démarrage et émet un ou plusieurs signaux indiquant celle-ci ; et

un système de surveillance qui reçoit les signaux émis par le système de détection, compare la pression de démarrage détectée avec la pression cible et, quand une comparaison indique une non-équivalence, envoie un ou plusieurs signaux de commande commensurables pour exécuter le réglage.

10. Système selon la revendication 9, comprenant en outre un boîtier (104) étanche aux gaz dans lequel est disposée la matière adsorbante (102) et qui est en communication fluidique avec la structure pneumatique.

11. Système selon la revendication 9 ou 10, dans lequel ledit régulateur comprend au moins un réchauffeur (110) pour chauffer la matière adsorbante (102) quand la pression cible dépasse la pression de démarrage.

12. Système selon la revendication 10 ou 11, comprenant en outre un véhicule comportant une ou plusieurs structures pneumatiques (10) faisant partie intégrante de celui-ci.

FIG. 1

FIG. 2

FIG. 3

FIG. 4

FIG. 5

FIG. 6

FIG. 7A

FIG. 7B

FIG. 7C

801

802

803

804

805

806

807

FIG. 8A

808

809

FIG. 8B

FIG. 9

FIG. 10A

FIG. 10B

1101

1102

## FIG. 11A

1102

## FIG. 11B

1103

## FIG. 11C

EP 3 165 270 B1

FIG. 12A

FIG. 12B

FIG. 12C

FIG. 13A

FIG. 13B

FIG. 13C

FIG. 13D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4477062 A
- DE 1063860
- WO 2015145148 A
- DE 102004011121